# EUROPEAN PATENT SPECIFICATION

(11) **EP 3 475 565 B1**
(45) Date of publication and mention of the grant of the patent: **04.11.2020**
(21) Application number: 17712009.4
(22) Date of filing: 09.03.2017
(51) Int. Cl.: F03D 80/80, F03D 80/50, F03D 13/20

(54) **A WIND TURBINE NACELLE WITH A REAR FRAME STRUCTURE**
WINDTURBINENGONDEL MIT EINER HINTEREN RAHMENSTRUKTUR
NACELLE D'ÉOLIENNE AVEC STRUCTURE DE CADRE ARRIÈRE

(30) Priority: 22.06.2016 DK 201670450
(43) Date of publication of application: 01.05.2019
(73) Proprietor: Vestas Wind Systems A/S, 8200 Aarhus N (DK)
(72) Inventor: BOVENKAMP, Christian, 8752 Østbirk (DK); LIINGAARD, Anders Haslund, 8382 Hinnerup (DK); PETERSEN, Morten Hedegaard, 8920 Randers NV (DK); THOMSEN, Kristoffer Isbak, 8200 Aarhus N (DK)
(74) Representative: Vestas Patents Department
(86) International application number: PCT/DK2017/050067
(87) International publication number: WO 2017/220094

(56) References cited:
- EP-A2- 2 184 489
- WO-A1-2011/089273
- WO-A2-2011/051272
- DE-A1-102005 042 394

## Description

### FIELD OF THE INVENTION

The present invention relates to a nacelle of a wind turbine, the nacelle comprising a rear frame structure. The rear frame structure of the invention has a modular design, allowing nacelles of various dimensions to be formed from a limited number of basis components.

### BACKGROUND OF THE INVENTION

Wind turbines normally comprise a nacelle arranged on top of a tower structure. The nacelle carries a rotor with one or more wind turbine blades, and various components, such as gear arrangement, generator, etc., are normally housed inside the nacelle.

Nacelles often comprise a main frame, a rear frame structure and a nacelle cover. The main frame is a load carrying structure arranged to be connected to the tower structure via a yaw mechanism, allowing the nacelle to perform rotating movements with respect to the tower structure in order to direct the wind turbine blades towards the incoming wind. The rear frame structure also exhibits load carrying capabilities, e.g. for carrying some of the components being housed inside the nacelle, and is connected at one end to the main frame. The nacelle cover forms an outer boundary of the nacelle and provides protection against the environment for the components arranged inside the nacelle. The nacelle cover will often not exhibit load carrying capabilities.

In prior art wind turbines, the nacelle, including the rear frame structure, is designed for use in a specific type of wind turbine. For instance, the dimensions of the nacelle are selected to match specific requirements of the type of wind turbine in question. Accordingly, the components used for manufacturing the nacelle, including the components used for manufacturing the rear frame structure of the nacelle, must be specifically designed for specific types of wind turbines. US2011/0243726 A1 discloses a nacelle comprising a modular frame structure, the space frame is formed by bars of adjustable length and nodes connecting the end points of the bars.

WO 2009/150162 A2 discloses a housing for the nacelle of a wind turbine, comprising a support structure composed of tubes and braces, and covering segments which are fastened to the support structure and self-supporting. The housing combines the advantages of structures that are self-supporting as a whole and the paneling of a support structure comprising parts that are not self-supporting without having the disadvantages thereof.

### DESCRIPTION OF THE INVENTION

It is an object of embodiments of the invention to provide a nacelle of a wind turbine, comprising a rear frame structure allowing nacelles of various dimensions to be formed from a limited number of basis components.

It is a further object of embodiments of the invention to provide a nacelle of a wind turbine, comprising a rear frame structure being easy to assemble.

It is an even further object of embodiments of the invention to provide a nacelle of a wind turbine, comprising a rear frame structure being capable of improved handling of bending moments as compared to prior art rear frame structures.

According to a first aspect the invention provides a nacelle of a wind turbine, the nacelle comprising a rear frame structure, the rear frame structure comprising:
- a plurality of truss members, and
- a plurality of pivot joints,
wherein each pivot joint interconnects ends of at least two truss members, thereby forming a truss structure with the pivot joints arranged in node points of the truss structure, and wherein at least some of the pivot joints are adjustable in such a manner that an angle between two truss members being interconnected via a pivot joint is adjustable by means of the pivot joint.

Thus, according to the first aspect, the invention provides a nacelle comprising a rear frame structure. As described above, in the present context the term 'rear frame structure' should be interpreted to mean a load carrying structure of the nacelle, which is not directly connected to the tower structure of the wind turbine.

The rear frame structure comprises a plurality of truss members and a plurality of pivot joints. In the present context the term 'truss member' should be interpreted to mean an elongated and relatively rigid member being suitable for forming part of a truss structure, and which is arranged to provide load carrying capability to the rear frame structure. The truss members could, e.g., be in the form of rods, beams or the like.

In the present context the term 'pivot joint' should be interpreted to mean a member which is capable of performing pivotal movements. For instance, the pivot joints may comprise at least two parts being capable of performing pivotal movements with respect to each other.

Each pivot joint interconnects ends of at least two truss members. Thereby a truss structure is formed with the pivot joints arranged in node points of the truss structure. Node points of the truss structure, and thereby the pivot joints, are interconnected by truss members. Accordingly, the truss structure is primarily formed by truss members and pivot joints. However, it is not ruled out that further components or parts are incorporated in or mounted on the truss structure.

At least some of the pivot joints are adjustable in such a manner that an angle between two truss members being interconnected via a pivot joint is adjustable by means of the pivot joint. Thus, the ability of the pivot joints to perform pivotal movements is used for adjusting the angle defined between two truss members connected to a given pivot joint. Accordingly, the angles defined in the truss structure are adjustable. This allows the dimensions of the rear frame structure, and thereby of the nacelle, to be customized, while using standardized truss members and pivot joints. Thereby a variety of different nacelles can be provided, using only a limited number of different components, and it is not necessary to design new components in order to design a new nacelle, e.g. for a new type of wind turbine. This reduces the number of required standard components to a minimum, thereby lowering the manufacturing costs. Accordingly, the rear frame structure is modular in the sense that it is made from a limited number of different components, which can be assembled in a manner which results in a desired size or shape of the rear frame structure. Furthermore, the standardized truss members and pivot joints are likely to be easily accessible at almost any location, and thereby possible sourcing problems are avoided.

Furthermore, since pivot joints are arranged in the node points of the truss structure, the truss structure can easily be assembled without requiring high tolerances on the truss member and pivot joints.

Finally, the pivot joints are moment neutral, and therefore bending moments are not introduced in the truss members. Accordingly, only compression and tensile forces need to be handled by the truss members.

The rear frame structure may define at least a bottom part and two side parts. According to this embodiment, the bottom part defines a lower boundary of the rear frame structure, and may be arranged to carry one or more components arranged inside the nacelle. The side parts may extend substantially transversely to the bottom part.

At least one of the truss members forming part of the bottom part of the rear frame structure may be disconnectable from a pivot joint, thereby allowing the truss member to pivot away from its normal position in the rear frame structure, via a pivot joint arranged at an opposite end of the truss member. This may temporarily provide an opening in the bottom part of the rear frame structure with a sufficient size to allow a large wind turbine component, such as a gear arrangement or a generator, to pass through the opening. Thereby such large wind turbine components can be hoisted to or lowered from the nacelle, via the provided opening. In this case, the truss member being pivoted away from its normal position may be temporarily replaced by a wire in order to prevent that the rear frame structure is weakened to a too great extent while the truss member is pivoted away from its normal position.

The rear frame structure may further define a top part. According to this embodiment, the top part defines an upper boundary of the rear frame structure. As an alternative, the rear frame structure may not be provided with a top part. In this case an upper boundary of the nacelle is purely provided by a part of a nacelle cover mounted on the rear frame structure.

All of the truss members may be of substantially identical length. According to this embodiment, the distances between neighbouring node points of the truss structure are substantially identical, since these distances are defined by the lengths of the truss members interconnecting the pivot joints. Furthermore, only one kind of truss member is required in order to manufacture a given kind of nacelle. According to this embodiment, nacelles of various dimensions could be obtained by replacing the truss members with truss members having a different length, or by adding further truss members and pivot joints or removing some of the truss members and pivot joints.

As an alternative, the truss members may have different lengths, and the length of a given truss member may be selected according to the intended position of the truss member in the truss structure. However, the number of available lengths of the truss members is preferably limited.

Alternatively or additionally, all of the truss members may have substantially identical dimensions along directions being transversely to a longitudinal direction of the truss members, or the transversal dimensions of the truss members may vary from one truss member to another. For instance, one part of the rear frame structure may require truss members of a given strength, while another part of the rear frame structure requires truss members of a lower or higher strength. In this case, a truss member of larger transversal dimensions may be selected for the part of the rear frame structure which requires the higher strength.

At least one of the pivot joints may comprise a base part and at least two connecting parts, each connecting part being attached to the base part via a hinge structure, and each connecting part being arranged to be connected to or form part of a truss member. According to this embodiment, the pivoting capability of the pivot joint is provided by the hinge structures. Since a given truss member is connected to a given pivot joint via a connecting part, the truss member is allowed to pivot relative to the base part, via one of the hinge structures.

The connecting parts may form part of truss members. In this case an end of a truss member may be directly connected to a hinge structure. As an alternative, pivot joints may be manufactured with the hinge structures interconnecting the base part and the connecting parts, and the truss members may be attached the respective connecting parts during assembly of the rear frame structure, e.g. by means of bolt connections.

The base part may be a casted part. As an alternative, the base part may be cut out from a plate member, or it may be provided in any other suitable manner.

At least one of the pivot joints may be provided with a locking mechanism allowing substantially free pivotal movements of the pivot joints when the locking mechanism is in an unlocked position, and such free pivotal movement may be prevented or restricted when the locking mechanism is in a locked position. According to this embodiment, the locking mechanisms of the pivot joints may be in the unlocked position during assembly of the rear frame structure, thereby allowing easy assembly of the rear frame structure, and allowing suitable angles between the truss members to be selected. Once the rear frame structure has been assembled, at least some of the locking mechanisms may be moved into the locking position, thereby preventing or restricting the pivotal movements of the pivot joints. Thereby the angles between the truss members, which were selected during assembly of the rear frame structure, are substantially fixed once the assembly of the rear frame structure has been completed. Thereby play in the rear frame structure is reduced.

The locking mechanism could, e.g., be or include a clamp, one or more bolts, or any other suitable kind of locking mechanism.

At least one of the truss members may be pre-stressed. Thereby the truss structure is very stable.

The truss structure may define one or more triangles, the sides of the triangle(s) being formed by truss members, and the vertices of the triangle(s) being formed by pivot joints. A truss structure defining triangles is normally a very stable structure. In the case that all of the truss members are of substantially identical length, the triangles defined by the truss structure are equilateral triangles, i.e. all of the sides of the triangle are of the same length. As an alternative, at least some of the triangles may be isosceles triangles, i.e. two of the sides of the triangle are of the same length, and the length of the third side differs from the length of the other two.

At least one of the pivot joints may be provided with means for attaching a nacelle cover to the rear frame structure. According to this embodiment, the nacelle cover is mounted on the rear frame structure via the pivot joints, and thereby via the node points of the truss structure. This is an advantage because it is desirable to handle loads in the truss structure at the node points. The means for attaching the nacelle cover to the rear frame structure may be resilient. This may, e.g., be obtained by forming at least a part of the attaching means from a resilient material, such as rubber. Thereby vibrations or various moments introduced in the rear frame structure and/or in the nacelle cover are removed or dampened instead of being transferred to the nacelle cover or rear frame structure, respectively. This reduces noise during operation of the wind turbine, as well as wear on the nacelle.

The rear frame structure may be connectable to a base frame of a wind turbine. For instance one or more of the truss members may have one end connected to the base frame and an opposite end connected to a pivot joint.

According to a second aspect, the invention provides a wind turbine comprising a nacelle according to the first aspect of the invention. Accordingly, the remarks set forth above with reference to the first aspect of the invention are equally applicable here.

### BRIEF DESCRIPTION OF THE DRAWINGS

The invention will now be described in further detail with reference to the accompanying drawings in which
Fig. 1 is a side view of a rear frame structure for a nacelle according to an embodiment of the invention,
Fig. 2 is a top view of the rear frame structure of Fig. 1,
Figs. 3-7 illustrate a pivot joint for a nacelle according to an embodiment of the invention,
Fig. 8 shows the individual parts of the pivot joint of Figs. 3-7, and
Fig. 9 is a perspective view of a truss member for a nacelle according to an embodiment of the invention.

### DETAILED DESCRIPTION OF THE DRAWINGS

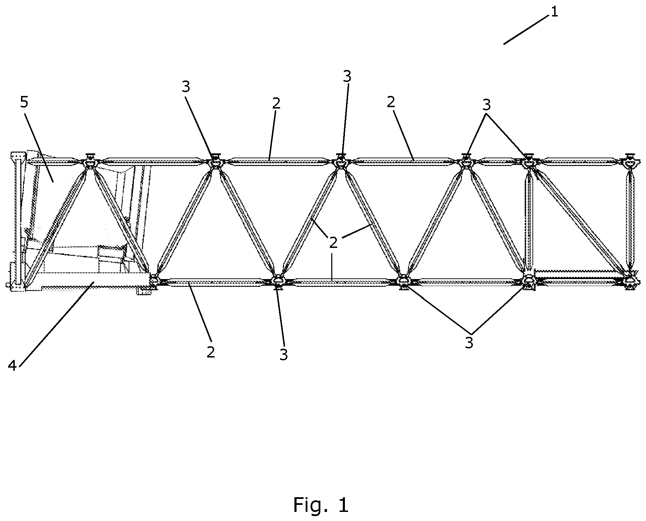

Fig. 1 is a side view of a rear frame structure 1 for a nacelle according to an embodiment of the invention. The rear frame structure 1 comprises a plurality of truss members 2, being interconnected via a plurality of pivot joints 3, thereby forming a truss structure with the pivot joints 3 arranged in the node points of the truss structure. The truss structure defines a plurality of triangles, with truss members 2 forming the sides of the triangles and pivot joints 3 forming the vertices of the triangles.

The pivot joints 3 are capable of performing pivotal movements in such a manner that an angle defined between two truss members 2 having their ends connected to a given pivot joint 3 can be adjusted. This makes it easy to assemble the rear frame structure and reduces the requirements to tolerances of the truss members 2 and the pivot joints 3. Furthermore, the pivot joints 3 are moment neutral, and therefore bending moments are not introduced in the truss members 2. Thereby the truss members 2 only have to handle compression and tensile forces. Finally, designing the rear frame structure 1 as a truss structure of truss members 2 and pivot joints, allows rear frame structures 1 of various dimensions to be created, using the same basis components. For instance, by increasing the angle defined between the truss members 2 being connected to the top pivot joints 3, and replacing the truss members 2 arranged immediately below these pivot joints 3 by a longer truss member 2, the length of the rear frame structure 1 is increased, and the height of the rear frame structure 1 is decreased. This is an advantage, because nacelles of varying dimensions, such as nacelles for a number of different types of wind turbines, can be obtained with a very limited number of basis components. As an alternative, the length of the rear frame structure 1 can easily be adjusted by adding or removing a section corresponding to a triangle of the truss structure to/from the rear frame structure 1.

The rear frame structure 1 defines a bottom part and two side parts, one of the side parts being visible in Fig. 1.

The rear frame structure 1 is connected to a base frame 4 of the nacelle, the base frame 4 carrying a main bearing 5.

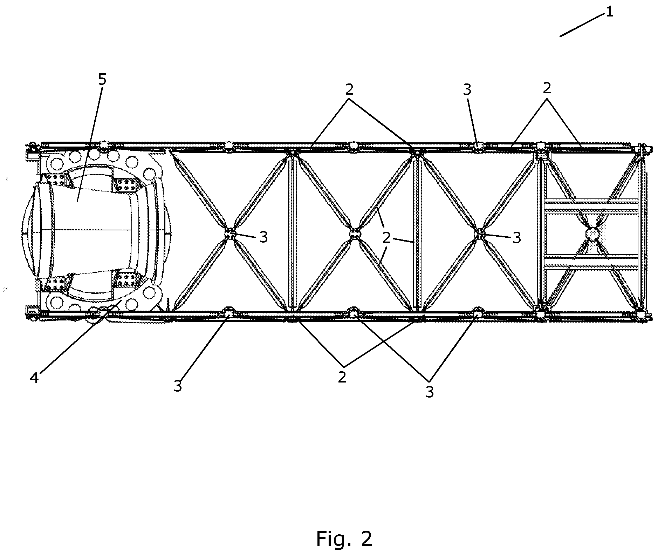

Fig. 2 is a top view of the rear frame structure 1 of Fig. 1. Thereby the bottom part defined by the rear frame structure 1 is visible. It is also clear from Fig. 2 that the rear frame structure 1 does not define a top part, i.e. the rear frame structure shown in Figs. 1 and 2 is open in an upwards direction.

It is noted that, even though the rear frame structure 1 illustrated in Figs. 1 and 2 defines a number of triangles, it is not ruled out that the truss members 2 and pivot joints 3 could be arranged according to other configurations, and such configurations also form part of the present invention. Furthermore, rear frame structures 1 comprising more or fewer truss members 2 and/or pivot joints 3 than what is shown in Figs. 1 and 2 also fall within the scope of the present invention.

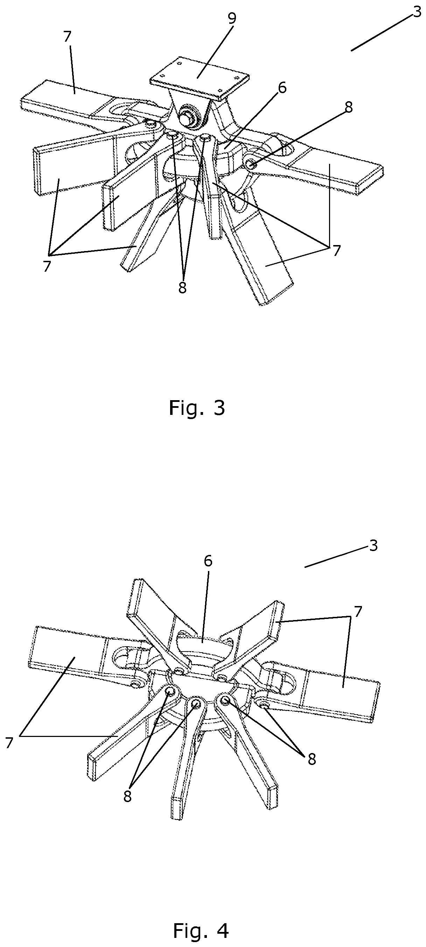

Figs. 3-7 illustrate a pivot joint 3 for use in a rear frame structure of a nacelle according to an embodiment of the invention. For instance, the pivot joint 3 of Figs. 3-7 could be used in the rear frame structure 1 of Figs. 1 and 2.

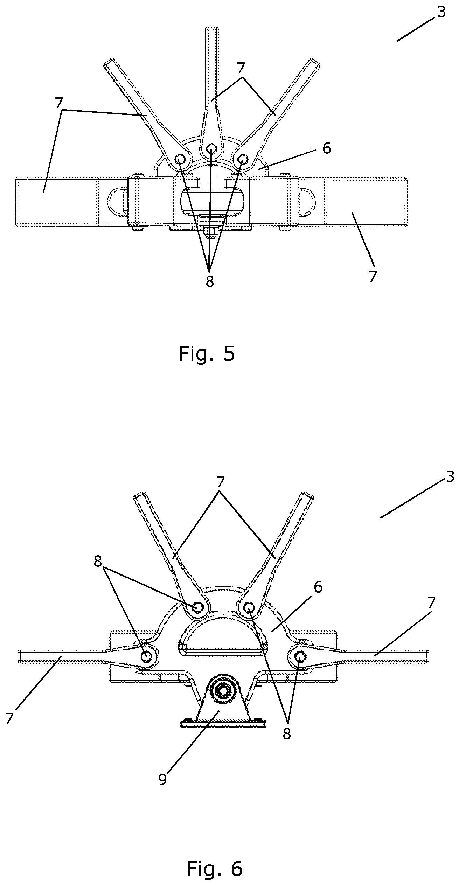

Figs. 3 and 4 are perspective views of the pivot joint 3 from two different angles, and Figs. 5-7 are side views of the pivot joint 3 from various angles.

The pivot joint 3 comprises a base part 6 and seven connecting parts 7. Each of the connecting parts 7 may be connected to a truss member when the pivot joint 3 forms part of a rear frame structure. However, in most cases only some of the connecting parts 7 will actually be connected to a truss member. Which of the connecting parts 7 are connected to truss members and which are not, is determined by the position of the pivot joint 3 in the rear frame structure 1. It is noted that, even though the pivot joint 3 illustrated in Figs. 3-7 comprises seven connecting parts 7, it is not ruled out that the pivot joint 3 could comprise fewer or more connecting parts 7, and such pivot joints 3 should also be regarded as falling within the scope of protection of the present invention. For instance, the pivot joint could comprise two, three, four, five, six, eight, nine or even more connecting parts 7.

The connecting parts 7 are each attached to the base part 6 via a hinge structure in the form of a pin 8 extending through the base part 6 and the respective connecting part 7. This allows the connecting parts 7 to perform pivotal movements with respect to the base part 6 about an axis defined by the corresponding pin 8.

The pins 8 of the pivot joint 3 are arranged in such a manner that four of them extend in parallel, and the remaining three extend perpendicular thereto. This allows the pivot joint to interconnect truss members which extend in different planes, for instance a truss member forming part of a side part of a rear frame structure and a truss member forming part of a bottom part of the rear frame structure. It should be noted that pivot joints 3 in which all of the pins 8 extend in parallel should also be regarded as falling within the scope of protection of the present invention.

The pivot joint 3 further comprises an attaching part 9 arranged to have a nacelle cover attached thereto. Thereby a nacelle cover can be attached to the resulting rear frame structure at the pivot joints 3. This is an advantage, because the pivot joints 3 are arranged in the node points of the truss structure, and it is desirable to handle loads via the node points.

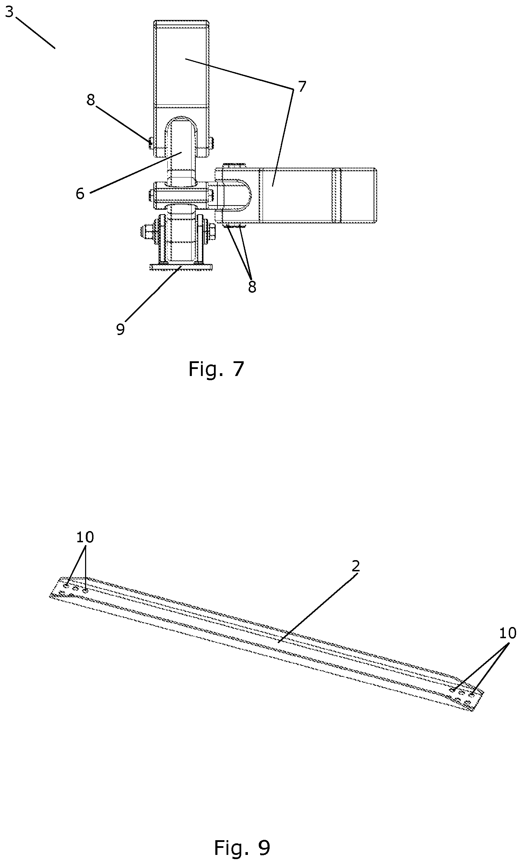

Fig. 8 shows the individual parts of the pivot joint 3 of Figs. 3-7. Thus, the base part 6, the connecting part 7, the pin 8 and the attaching part 9 can be clearly seen.

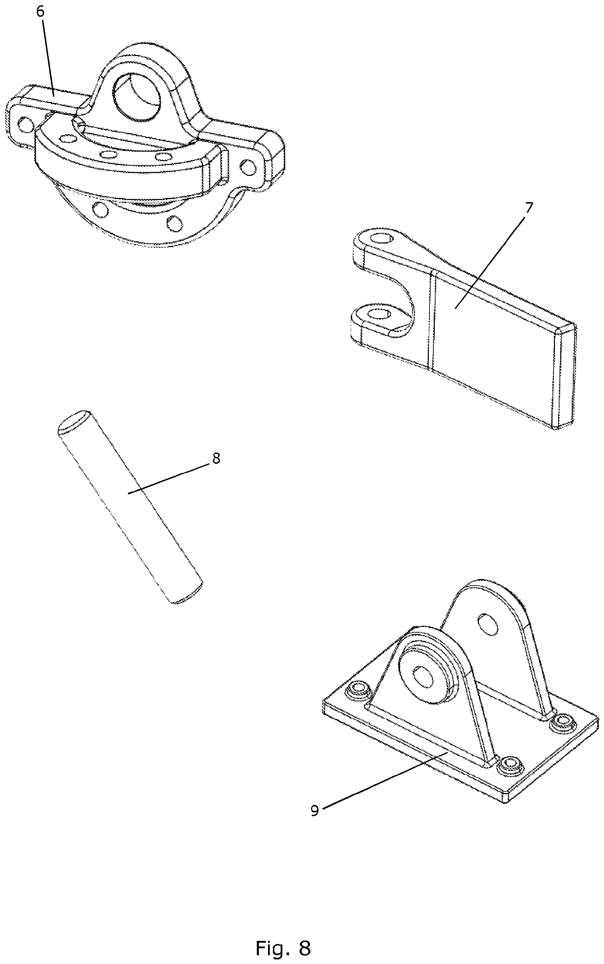

Fig. 9 is a perspective view of a truss member 2 for a rear frame structure of a nacelle according to an embodiment of the invention. For instance, the truss member 2 of Fig. 9 could be used in the rear frame structure 1 of Figs. 1 and 2. Each of the ends of the truss member 2 is provided with six holes 10, allowing the ends of the truss member 2 to be connected to a pivot joint. For instance, the truss member 2 could be connected to a connecting part 7 of the pivot joint 3 of Figs. 3-7.

## Claims

1. A nacelle of a wind turbine, the nacelle comprising a rear frame structure (1), the rear frame structure (1) comprising:
- a plurality of truss members (2), and
- a plurality of pivot joints (3),
wherein each pivot joint (3) interconnects ends of at least two truss members (2), thereby forming a truss structure with the pivot joints (3) arranged in node points of the truss structure, and wherein at least some of the pivot joints (3) are adjustable in such a manner that an angle between two truss members (2) being interconnected via a pivot joint (3) is adjustable by means of the pivot joint (3).

2. A nacelle according to claim 1, wherein the rear frame structure (1) defines at least a bottom part and two side parts.

3. A nacelle according to claim 2, wherein the rear frame structure (1) further defines a top part.

4. A nacelle according to any of the preceding claims, wherein all of the truss members (2) are of substantially identical length.

5. A nacelle according to any of the preceding claims, wherein at least one of the pivot joints (3) comprises a base part (6) and at least two connecting parts (7), each connecting part (7) being attached to the base part (6) via a hinge structure (8), and each connecting part (7) being arranged to be connected to or form part of a truss member (2).

6. A nacelle according to claim 5, wherein the base part (6) is a casted part.

7. A nacelle according to any of the preceding claims, wherein at least one of the pivot joints (3) is/are provided with a locking mechanism allowing substantially free pivotal movements of the pivot joints (3) when the locking mechanism is in an unlocked position, and wherein such free pivotal movement is prevented or restricted when the locking mechanism is in a locked position.

8. A nacelle according to any of the preceding claims, wherein at least one of the truss members (2) is pre-stressed.

9. A nacelle according to any of the preceding claims, wherein the truss structure defines one or more triangles, the sides of the triangle(s) being formed by truss members (2), and the vertices of the triangle(s) being formed by pivot joints (3).

10. A nacelle according to any of the preceding claims, wherein at least one of the pivot joints (3) is provided with means (9) for attaching a nacelle cover to the rear frame structure (1).

11. A nacelle according to any of the preceding claims, wherein the rear frame structure (1) is connectable to a base frame (4) of a wind turbine.

12. A wind turbine comprising a nacelle according to any of the preceding claims.

## Patentansprüche

1. Gondel einer Windkraftanlage, wobei die Gondel eine Hinterrahmenstruktur (1) umfasst, wobei die Hinterrahmenstruktur (1) umfasst:
- eine Mehrzahl von Gitterelementen (2) und
- eine Mehrzahl von Drehgelenken (3),
wobei jedes Drehgelenk (3) Enden von wenigstens zwei Gitterelementen (2) miteinander verbindet, wodurch eine Gitterstruktur gebildet wird, bei der die Drehgelenke (3) in Knotenpunkten der Gitterstruktur angeordnet sind, und wobei wenigstens einige der Drehgelenke (3) derart einstellbar sind, dass ein Winkel zwischen zwei Gitterelementen (2), die über ein Drehgelenk (3) miteinander verbunden sind, mittels des Drehgelenks (3) einstellbar ist.

2. Gondel nach Anspruch 1, wobei die Hinterrahmenstruktur (1) wenigstens ein Unterteil und zwei Seitenteile definiert.

3. Gondel nach Anspruch 2, wobei die Hinterrahmenstruktur (1) weiter ein Oberteil definiert.

4. Gondel nach einem der vorstehenden Ansprüche, wobei sämtliche Gitterelemente (2) eine im Wesentlichen identische Länge aufweisen.

5. Gondel nach einem der vorstehenden Ansprüche, wobei wenigstens eines der Drehgelenke (3) ein Basisteil (6) und wenigstens zwei Verbindungsteile (7) umfasst, wobei jedes Verbindungsteil (7) über eine Scharnierstruktur (8) an dem Basisteil (6) befestigt ist und jedes Verbindungsteil (7) so angeordnet ist, dass es mit einem Gitterelement (2) verbunden ist oder einen Teil eines solchen bildet.

6. Gondel nach Anspruch 5, wobei das Basisteil (6) ein gegossenes Teil ist.

7. Gondel nach einem der vorstehenden Ansprüche, wobei wenigstens eines der Drehgelenke (3) mit einem Verriegelungsmechanismus bereitgestellt ist/sind, der im Wesentlichen freie Drehbewegungen der Drehgelenke (3) ermöglicht, wenn sich der Verriegelungsmechanismus in einer nicht verriegelten Position befindet, und wobei eine derartige freie Drehbewegung verhindert oder begrenzt wird, wenn sich der Verriegelungsmechanismus in einer Verriegelungsposition befindet.

8. Gondel nach einem der vorstehenden Ansprüche, wobei wenigstens eines der Gitterelemente (2) vorgespannt ist.

9. Gondel nach einem der vorstehenden Ansprüche, wobei die Gitterstruktur ein oder mehrere Dreiecke definiert, wobei die Seiten des Dreiecks / der Dreiecke durch Gitterelemente (2) gebildet werden und die Eckpunkte des Dreiecks / der Dreiecke durch Drehgelenke (3) gebildet werden.

10. Gondel nach einem der vorstehenden Ansprüche, wobei wenigstens eines der Drehgelenke (3) mit einem Mittel (9) zum Befestigen einer Gondelabdeckung an der Hinterrahmenstruktur (1) bereitgestellt ist.

11. Gondel nach einem der vorstehenden Ansprüche, wobei die Hinterrahmenstruktur (1) mit einem Basisrahmen (4) einer Windkraftanlage verbindbar ist.

12. Windkraftanlage, die eine Gondel nach einem der vorstehenden Ansprüche umfasst.

## Revendications

1. Nacelle d'une éolienne, la nacelle comprenant une structure de cadre arrière (1), la structure de cadre arrière (1) comprenant :
- une pluralité d'éléments d'armature (2), et
- une pluralité d'articulations de pivot (3),
dans laquelle chaque articulation de pivot (3) relie des extrémités d'au moins deux éléments d'armature (2), en formant de ce fait une structure d'armature avec les articulations de pivot (3) agencées dans des points de nœud de la structure d'armature, et dans laquelle au moins certaines des articulations de pivot (3) sont ajustables de telle manière qu'un angle entre deux éléments d'armature (2) reliés via une articulation de pivot (3) soit ajustable au moyen de l'articulation de pivot (3).

2. Nacelle selon la revendication 1, dans laquelle la structure de cadre arrière (1) définit au moins une partie de fond et deux parties latérales.

3. Nacelle selon la revendication 2, dans laquelle la structure de cadre arrière (1) définit en outre une partie de sommet.

4. Nacelle selon l'une quelconque des revendications précédentes, dans laquelle tous les éléments d'armature (2) sont de longueur sensiblement identique.

5. Nacelle selon l'une quelconque des revendications précédentes, dans laquelle au moins l'une des articulations de pivot (3) comprend une partie de base (6) et au moins deux parties de raccordement (7), chaque partie de raccordement (7) étant attachée à la partie de base (6) via une structure de charnière (8), et chaque partie de raccordement (7) étant agencée pour être raccordée à un élément d'armature (2) ou pour en faire partie.

6. Nacelle selon la revendication 5, dans laquelle la partie de base (6) est une partie coulée.

7. Nacelle selon l'une quelconque des revendications précédentes, dans laquelle au moins l'une des articulations de pivot (3) est pourvue d'un mécanisme de verrouillage permettant des mouvements pivotants sensiblement libres des articulations de pivot (3) lorsque le mécanisme de verrouillage est dans une position déverrouillée, et dans laquelle un tel mouvement pivotant libre est empêché ou limité lorsque le mécanisme de verrouillage est dans une position verrouillée.

8. Nacelle selon l'une quelconque des revendications précédentes, dans laquelle au moins l'un des éléments d'armature (2) est précontraint.

9. Nacelle selon l'une quelconque des revendications précédentes, dans laquelle la structure d'armature définit un ou plusieurs triangles, les côtés de triangle(s) étant formés par des éléments d'armature (2), et les sommets de triangle(s) étant formés par des articulations de pivot (3).

10. Nacelle selon l'une quelconque des revendications précédentes, dans laquelle au moins l'une des articulations de pivot (3) est pourvue de moyens (9) pour attacher un couvercle de nacelle à la structure de cadre arrière (1).

11. Nacelle selon l'une quelconque des revendications précédentes, dans laquelle la structure de cadre arrière (1) peut être raccordée à un cadre de base (4) d'une éolienne.

12. Eolienne comprenant une nacelle selon l'une quelconque des revendications précédentes.
